# EUROPÄISCHE PATENTSCHRIFT

(11) **EP 0 644 011 B1**
(45) Veröffentlichungstag und Bekanntmachung des Hinweises auf die Patenterteilung: **29.04.1998**
(21) Anmeldenummer: 94114270.5
(22) Anmeldetag: 10.09.1994
(51) Int. Cl.: B23K 9/09, G05F 1/08

(54) **Schweissgerät und Verfahren zur Herstellung eines vorbestimmbaren Stromverlaufes für ein Schweissgerät**
Method, apparatus to predetermine the welding current
Méthode et appareil pour la prédétermination du courant de soudage

(30) Priorität: 15.09.1993 AT 1866/93
(43) Veröffentlichungstag der Anmeldung: 22.03.1995
(73) Patentinhaber: FRONIUS SCHWEISSMASCHINEN KG AUSTRIA, A-4600 Wels/Thalheim (AT)
(72) Erfinder: Burgstaller, Andreas, A-4653 Eberstallzell 38 (AT); Artelsmair, Josef, A-4552 Wartberg/Krems (AT)
(74) Vertreter: Secklehner, Günter, Dr.

(56) Entgegenhaltungen:
- EP-A- 0 369 367
- EP-A- 0 502 478
- GB-A- 2 223 635
- GB-A- 2 268 009

## Beschreibung

Die Erfindung betrifft ein Verfahren zur Herstellung eines vorbestimmbaren Stromverlaufes für einen Schweißstrom sowie ein Schweißgerät, wie es im Oberbegriff des Patentanspruches 1 und des Patentanspruches 11 beschrieben ist.

Aus der GB-A-2 223 625 ist ein Verfahren sowie eine Steuervorrichtung zur Erzeugung einer Ausgangsspannung bekannt, bei dem zur Erzeugung von unterschiedlichen Kurvenformen auf einer vorgegebenen Kurvenform einzelne Impulse durch Zu- und Abschalten von Kondensatoren aufgesetzt werden. Nachteilig ist hierbei, daß zwar dadurch unterschiedliche Kurvenformen für die positive und negative Halbwelle erzeugt werden können, wobei jedoch diese unterschiedlichen Kurvenformen auf eine Grundkurvenform aufbauen, sodaß nur eine eingeschränkte Bildung von verschiedenen Kurvenformen möglicht ist.

Es sind bereits verschiedene Verfahren zur Herstellung eines vorbestimmbaren Stromverlaufes für Schweißgeräte bekannt, so unter anderem auch aus der DE-C1 41 13 117. Bei diesem Verfahren zum Widerstandsschweißen wird ein in periodischen Halbwellen pulsierender, insbesondere wechselnder Schweißstrom verwendet, der aus einer Primärwechselspannung eines Schweißtransformators erzeugt und durch Pulsdauermodulation derselben geregelt wird. Dazu wird jede Halbwelle n-mal zerhackt, wobei n > 1 ist. Zur Regelung des Schweißstroms wird entsprechend der Taktfrequenz bei jedem Takt ein Soll-Ist-Wert-Vergleich des Schweißstroms durchgeführt und dementsprechend oft auf die Pulsdauermodulation eingewirkt. Dadurch ist es möglich, eine bestimmte Kurvenform des Stromverlaufes über zwei aufeinanderfolgende Halbwellen beizubehalten. Durch die Hinterlegung verschiedener Kurvenformen in Sollwerttabellen ist es möglich, für unterschiedliche Anwendungsfälle unterschiedliche Kurvenformen für die Halbwellen zu verwenden. Nachteilig ist, daß eine rasche Anpassung an unterschiedliche Arbeitsbedingungen nur schwer möglich ist oder eine hohe Anzahl von Speichertabellen erfordert.

Der vorliegenden Erfindung liegt die Aufgabe zugrunde, ein Verfahren der obgenannten Art sowie ein Schweißgerät zu schaffen, bei welchen mit einer möglichst geringen Anzahl von fix hinterlegten Kurvenformen eine rasche Anpassung an unterschiedliche Arbeitsbedingungen und Anforderung, wie z.B. unterschiedliche Amplituden und Frequenzen, möglich ist.

Diese Erfindung wird durch die Maßnahmen im Kennzeichenteil des Patentanspruches 1 gelöst. Vorteilhaft ist bei dieser Lösung, daß es nunmehr möglich ist, die Kurvenformen von einander unmittelbar aufeinanderfolgenden Halbwellen völlig unabhängig festzulegen und zu regeln. Dadurch ist es möglich, bestimmte Schweißcharakteristiken einfacher einzuhalten, da der Energieverlauf bzw. die Energiezufuhr in das Schweißbad feinfühliger geregelt werden kann. Dazu kommt, daß durch diese Art der Regelung nur mehr der grundsätzliche Kurvenverlauf einmal in einer Sollwert-Tabelle hinterlegt werden muß, wo hingegen die unterschiedlichen Varianten hinsichtlich der Frequenz und der maximal erreichbaren Amplitude über die Vorgabe unterschiedlicher Sollwerte und die Veränderung der gespeicherten Referenzsignale in Abhängigkeit von diesen gewünschten Werten möglich ist, ohne daß dafür wieder eigene Referenzsignale hinterlegt werden müssen. Vorteilhaft ist weiters, daß aufgrund der unabhängigen Festlegung der Kurvenform von zwei unmittelbar aufeinanderfolgenden positiven oder einer positiven und negativen Halbwelle der Lärmpegel beispielsweise bei Verwendung einer sinusförmigen Kurvenform in der positiven Halbwelle gesenkt und ein geringerer Lichtbogendruck durch trapezförmige bzw. negative Rechteckkurvenform in der negativen Halbwelle erreicht werden kann. Gleichermaßen ist auch die Nadelbelastung durch die Kurvenform in der positiven Halbwelle veränderbar, ebenso wie der Lärmpegel durch die Kurvenform der negativen Halbwelle.

Es ist aber auch ein Vorgehen nach Patentanspruch 2 möglich, wodurch die Energiezufuhr in das Schweißbad exakt auf die Materialbedürfnisse abgestellt werden kann.

Gemäß Patentanspruch 3 empfiehlt sich ein Verfahrensablauf, durch den eine exakte Anpassung der jeweils vorgewählten Kurvenform an die zu verschweißenden Materialien erzielbar ist und darüber hinaus auch eine Feinabstimmung auf den jeweils verwendeten Schweißdraht bzw. das Schutzgas und dgl. vorgenommen werden kann, um ein optimales Schweißbad zu erzielen.

Vorteilhaft sind auch die Maßnahmen nach Patentanspruch 4, wodurch mit Speicherelementen mit relativ geringer Speicherfähigkeit das Auslangen gefunden werden kann und andererseits eine sehr rasche Reaktion und zur Verfügungstellung der Daten ermöglicht wird, womit auch bei hohen Frequenzen die Herstellung einer exakten Kurvenform erreicht wird.

Mit dem Verfahrensablauf nach Patentanspruch 5 ist es möglich, jeweils für die positive und negative Halbwelle eine der abgespeicherten, standardmäßigen Kurvenformen auszuwählen, wobei jeweils in Abhängigkeit von dem mit dem Zähler ermittelten Nulldurchgang die jeweilige Kurvenform zur Herstellung einer positiven oder negativen oder zweier unmittelbar aufeinanderfolgenden positiven Halbwellen oder zwei unmittelbar aufeinanderfolgenden negativen Halbwellen herangezogen werden kann.

Durch die Maßnahmen nach Patentanspruch 6 wird in vorteilhafter Weise erreicht, daß der Abschmelzvorgang innerhalb der vorgewählten Kurvenformen in weiten Grenzen einfach festgelegt werden kann.

Eine feinfühlige Regelung wird aber auch durch die Maßnahmen nach Patentanspruch 7 ermöglicht, da kontinuierlich zu jedem Zeitpunkt eine unmittelbare Anpassung an sich veränderte Regelgrößen erfolgen kann.

Vorteilhaft ist weiters auch ein Vorgehen nach Patentanspruch 8, da dadurch auch die Härte des Lichtbogens bzw. die Lärmentwicklung ausgehend von den Materialbedingungen einfach und rasch an die gewünschten Größen angepaßt werden kann.

Durch den Verfahrensablauf nach Patentanspruch 9 können unkontrollierte Kurvenverläufe, die gegebenenfalls zu einer starken Spritzerbildung oder dgl. führen können, vermieden werden.

Durch einen Verfahrensablauf nach Patentanspruch 10 wird mit Vorteil erreicht, daß bei unterschiedlichen Vorgaben für die Amplitudenhöhe und Frequenz und die Kurvenform des Stromverlaufes tatsächlich unterschiedliche Kurvenformen in den beiden Halbwellen erreicht werden.

Die Erfindung umfaßt auch ein Schweißgerät, wie es im Oberbegriff des Patentanspruches 11 beschrieben ist.

Dieses Schweißgerät ist durch die Merkmale im Kennzeichenteil des Patentanspruches 11 gekennzeichnet. Vorteilhaft ist hierbei, daß durch Verwendung nur weniger Referenzkurven deren Kurvenform zusätzlich durch die Vorwahl der entsprechenden maximalen Amplitude der Halbwelle bzw. der Frequenz einfach an unterschiedliche Einsatzbedingungen angepaßt werden kann. Weiters kann durch die Feststellung des Ablaufes der maximalen Anzahl von den eine Halbwelle bildenden Referenzsignalen ein vollautomatischer Wechsel, der im Datenspeicher hinterlegten Kurvenformen erreicht werden. Dadurch wird ein nahtloser Übergang zwischen den einzelnen Halbwellen geschaffen, und es werden Zeitverzögerungen, die zu einer Störung des Lichtbogens während des Schweißens führen könnten, zuverlässig vermieden.

Vorteilhaft ist weiters eine Ausgestaltung nach Patentanspruch 12, da eine rasche Umänderung der Bezugsgröße für die Erzeugung der gewünschten Kurvenform bei aufeinander folgenden Halbwellen sichergestellt ist.

Es ist aber auch ein Vorgehen nach Patentanspruch 13 möglich, da unkontrollierbare Steuerzustände durch Vermischung von vorher nicht exakt bekannten Stromverläufen vermieden werden.

Schließlich ist auch die Ausbildung nach Patentanspruch 14 von Vorteil, da dabei ein linearer Übergang zwischen den beiden Halbwellen geschaffen wird.

Zum besseren Verständnis der Erfindung wird diese im nachfolgenden anhand eines Ausführungsbeispieles näher beschrieben.

Es zeigen:
- Fig. 1: ein Blockschaltbild einer erfindungsgemäßen Steuervorrichtung für ein Schweißgerät in vereinfachter, schematischer Darstellung;
- Fig. 2: ein Schaltschema einer erfindungsgemäßen Steuervorrichtung zur Erzeugung eines vorbestimmbaren Stromverlaufes in vereinfachter, schematischer Darstellung;
- Fig. 3: ein Diagramm mit einem mit einer erfindungsgemäßen Steuervorrichtung erzeugten Stromverlauf der Ausgangsspannung;
- Fig. 4: ein Diagramm mit einem mit einer erfindungsgemäßen Steuervorrichtung erzeugten anderen Stromverlauf der Ausgangsspannung.

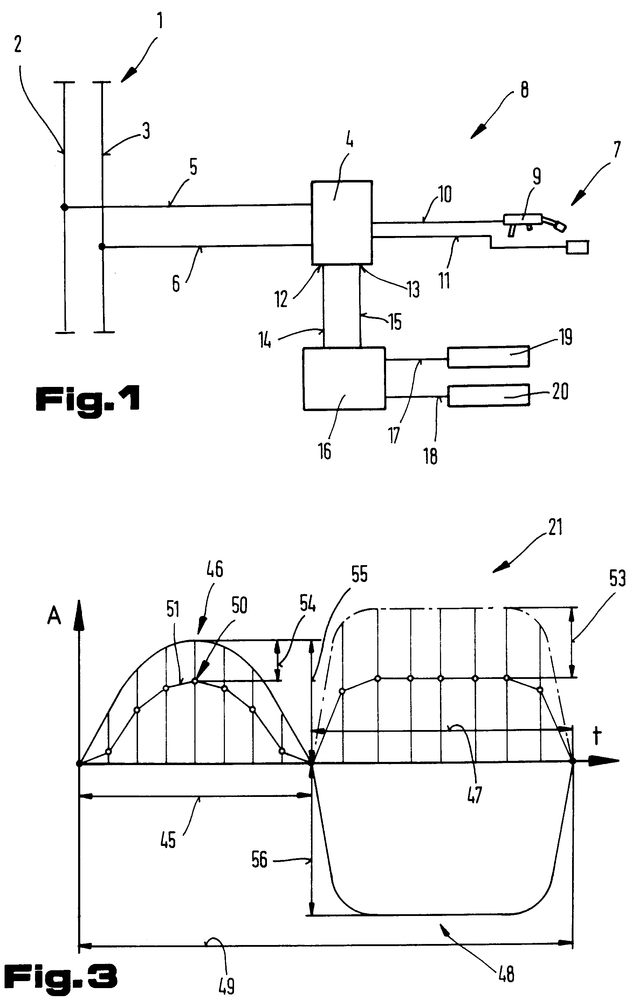

In Fig. 1 ist ein Spannungsversorgungsnetz 1 gezeigt, das aus einem Phasenleiter 2 und einem Nulleiter 3, z.B. des Netzes eines Elektroversorgungsunternehmens oder eines mobilen Stromgenerators, besteht.

Am Spannungsversorgungsnetz 1 ist eine Inverterstromquelle 4 über Zuleitungen 5, 6 angeschlossen. Über die Inverterstromquelle 4 wird ein Verbraucher 7, z.B. ein Elektromotor, ein Ladegerät oder bevorzugt ein Schweißgerät 8, mit einer Schweißpistole 9 zum Bearbeiten eines Werkstückes über Leitungen 10, 11 mit dem über positivem und negativem Potential versorgt. Zur Steuerung der Inverterstromquelle 4 ist an dessen Steuereingängen 12, 13 über Steuerleitungen 14, 15 eine Steuervorrichtung 16 angeschlossen. Die Steuervorrichtung 16 ist über Leitungen 17, 18 mit einer Eingabevorrichtung 19 und einer Ausgabevorrichtung 20 verbunden.

Mit der Eingabevorrichtung 19 werden der Steuervorrichtung 16 bestimmte Einstellungen, wie z.B. Amplitudenhöhe, Frequenz bzw. Tastverhältnis und Kurvenform, vorgegeben, die die Steuervorrichtung 16 der Ausgabevorrichtung 20 anzeigt und in der Steuervorrichtung 16 verarbeitet werden. Weiters wandelt die Steuervorrichtung 16 die von der Eingabevorrichtung 19 eingegebenen Parameter zum Ansteuern der Inverterstromquelle 4 um und steuert damit die Inverterstromquelle 4 über die Steuerleitungen 14, 15 an. Dabei werden über die Steuerleitung 14 die Parameter für die Amplitudenhöhe, die Frequenz bzw. das Tastverhältnis und die Kurvenform vorgegeben und liegt über die Steuerleitung 15 jeweils ein unterschiedliches Signal über die Zeitdauer der positiven oder der negativen Halbwelle an der Inverterstromquelle 4 an.

Die Inverterstromquelle 4 wandelt die von dem Spannungsversorgungsnetz 1 gelieferte Wechselspannung in eine Gleichspannung um. Nach dem Gleichrichten der Wechselspannung vom Spannungsversorgungsnetz 1 wird die Spannung in der Inverterstromquelle 4 wieder zerhackt, z.B. durch eine Pulsbreitenmodulation und entsprechend den vorgegebenen Parametern der Steuervorrichtung 16 in einen Ausgangsstrom umgewandelt, welcher über die Leitungen 10, 11 dem Verbraucher 7 zugeführt wird. Durch die Einstellung der Parameter kann der dem Verbraucher 7 zugeführte Ausgangsstrom der Inverterstromquelle 4 jede beliebige Kurvenform annehmen, d.h. es kann z.B. eine sinusförmige, positive Halbwelle sowie eine rechteckförmige, negative Halbwelle, die in ihrer Amplitude und ihrer Zeitdauer verschieden groß sein können dem Verbraucher 7 zugeführt werden.

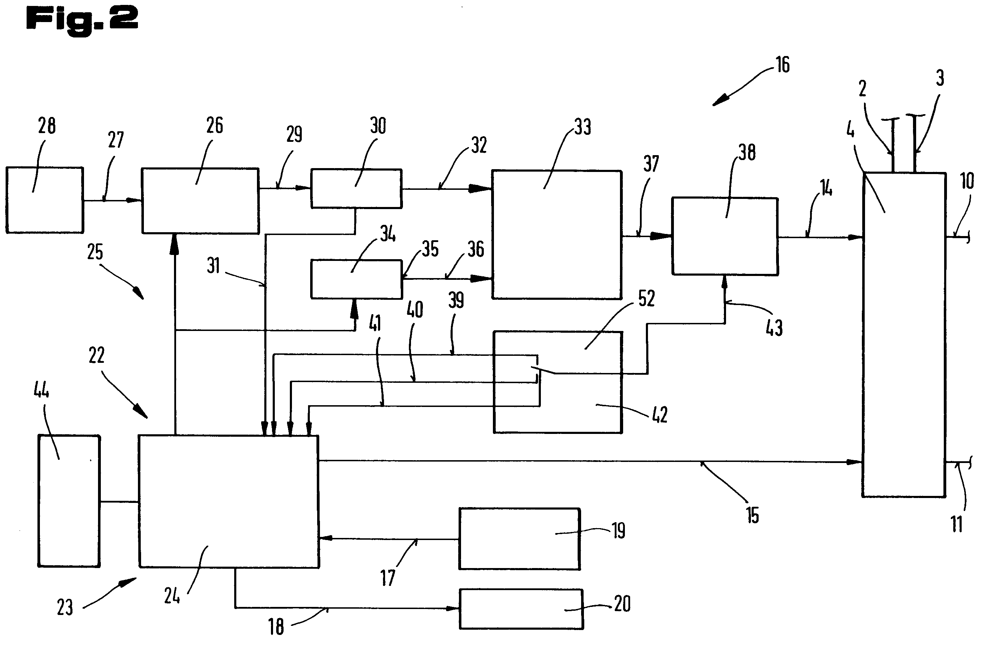

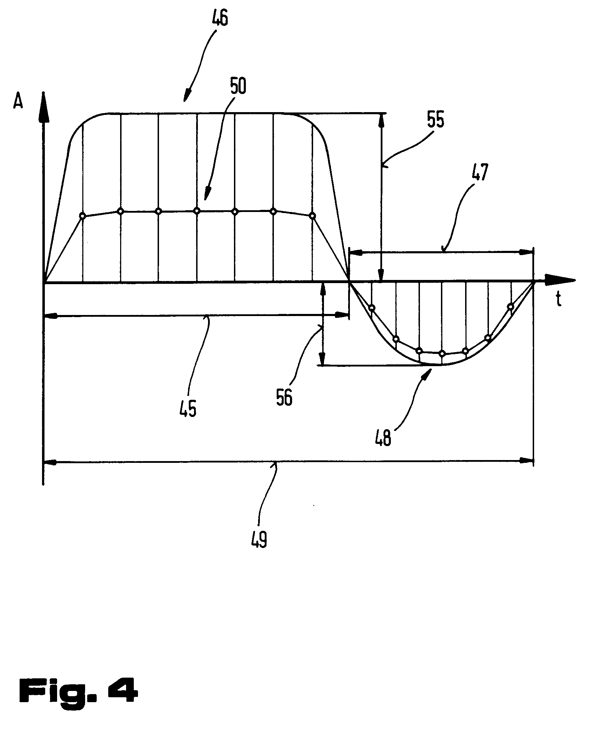

In Fig. 2 ist die erfindungsgemäße Steuervorrichtung 16 und in Fig. 3 ein Diagramm dargestellt. Bei dem Diagramm ist auf der Ordinate der Strom A und auf der Abszisse die Zeit t aufgetragen. Die in diesem Diagramm in vollen Linien dargestellte Kennlinie 21 zeigt nun den Stromverlauf am Ausgang der Inverterstromquelle 4, d.h. in den Leitungen 10, 11. Daneben ist in diesem Diagramm aber auch in strichpunktierten Linien der Signalverlauf am Eingang der Inverterstromquelle 4, nämlich in den Steuerleitungen 14 und 15 dargestellt.

Die Steuervorrichtung 16 weist dabei eine Rechnereinheit 22 auf. Die Rechnereinheit 22 besteht in diesem Ausführungsfall aus einem Rechner 23, der bevorzugt aus einem Mikroprozessor 24 in einem Industrie-PC oder einer selbstprogrammierbaren Steuerung oder einer konventiellen analogen oder digitalen Steuerung gebildet ist. An einem Eingang des Rechners 23 ist über eine Leitung 17 die Eingabevorrichtung 19 angeschlossen. Die Eingabevorrichtung 19 kann durch eine Tastatur oder durch jegliche andere Arten von Eingabemöglichkeiten, z.B. Potentiometer, gebildet sein. Weiters ist der Rechner 23 mit der Ausgabevorrichtung 20, die als Display-Anzeige oder als Bildschirm ausgebildet sein kann, über die Leitung 18 verbunden.

An weiteren Ausgängen des Rechners 23 ist über ein Bussystem 25, das aus Adreß- und Datenleitungen besteht, ein Timer 26 angeschlossen. Der Timer 26 wird über eine Leitung 27 von einem Taktgenerator 28 angesteuert. Der Ausgang des Timers 26 ist über eine Leitung 29 mit dem Eingang eines Zählers 30 verbunden. Weiters ist der Zähler 30 über eine Steuerleitung 31 mit einem Eingang des Rechners 23 verbunden. Die Ausgänge des Zählers 30 sind über Leitungen 32 mit den Eingängen eines Datenspeichers 33 verbunden.

Ein Ausgabebaustein 34 ist über das Bussystem 25 mit dem Rechner 23 verbunden. Der Ausgabebaustein 34 steuert von seinem Ausgang 35 über Adreßleitungen 36 den Datenspeicher 33 an. Die Ausgänge des Datenspeichers 33 werden über Leitungen 37 an einen Digital-Analogwandler 38 angeschlossen. Der Ausgang des Digital-Analogwandlers 38 ist über die Steuerleitung 14 mit der Inverterstromquelle 4 verbunden.

Vom Rechner 23 ist über Leitungen 39, 40, 41 eine Schaltvorrichtung 42 angeordnet. Der Ausgang der Schaltvorrichtung 42 ist über eine Steuerleitung 43 mit den Digital-Analogwandler 38 verbunden.

Wird nun die Steuervorrichtung 16 in Betrieb genommen, so können über die Eingabevorrichtung 19 die Parameter der Amplitudenhöhe der Frequenz bzw. der Zeitdauer sowie die Art der Kurvenform für die positive und negative Halbwelle getrennt eingestellt werden. Wird in der Eingabevorrichtung 19 nichts eingestellt, so ladet der Rechner 23 von einem Speicher 44 eine Grundeinstellung in seinen Hauptspeicher und zeigt diese an der Ausgabevorrichtung 20 an. Dabei ist es jedoch möglich, die Grundeinstellung, die der Rechner 23 in seinem Hauptspeicher geladen hat, über die Eingabevorrichtung 19 zu verändern.

Sind die Änderungen der Standardeinstellungen abgeschlossen oder bleiben diese gleich, so sendet der Rechner 23 über das Bussystem 25 eine Adresse für den Ausgabebaustein 34 aus, wodurch dieser aktiviert wird. Nach Aktivierung des Ausgabebausteins 34 sendet der Rechner 23 entsprechende Daten, die er von den eingestellten Parameter errechnet, über das Bussystem 25 aus, die in dem aktivierten Ausgabebaustein hinterlegt werden.

Der Inhalt dieser Daten beschreibt eine Kurvenform für eine Halbwelle, d.h. eine Adresse, die in dem Ausgabebaustein 34 gespeichert ist und ständig am Ausgang 35 anliegt und von dort über die Adreßleitungen 36 an den Datenspeicher 33 weitergegeben wird. In den Datenspeicher 33 sind unter einer Vielzahl unterschiedlicher Adressen die verschiedensten möglichen bzw. für die unterschiedlichsten Anwendungsfälle benötigten Kurvenformen, d.h. entweder Sinus-, Rechteck- oder Mischformen abgespeichert. Jede dieser einzelnen abgespeicherten, den unterschiedlichen Grundformen angepaßte Kurvenform wird aus einer Vielzahl von Referenzwerten bzw. -signalen zusammengesetzt, wie dies im folgenden noch im Detail erläutert werden wird. Für jede Kurvenform sind daher nun die einzelnen Referenzwerte mit aufeinanderfolgenden Adressen in einem Adreßbereich für die jeweilige Kurvenform, beispielsweise einer Halbwelle, hinterlegt. In dem Ausgabebaustein 34 ist nunmehr die für die jeweilige Kurvenform, die einen gesamten Adreßbereich mit ihren aufeinanderfolgenden Referenzwerten belegt, die Ausgangsadresse, also die Adresse des ersten Referenzsignals dieser Kurvenform hinterlegt. Über das vom Zähler 30 kommende Taktsignal wird die Adresse so lange jeweils um eine Stufe bzw. einen Wert erhöht, bis die vorgegebene Anzahl von eine Kurvenform bzw. eine Halbwelle definierten Referenzsignalen abgelaufen ist bzw. der Zähler einen maximalen oder voreinstellbaren Zählerstand erreicht hat. Vorteilhaft ist dabei, daß durch diese fixe Abspeicherung der Adresse des ersten Referenzsignals im Ausgabebaustein 34 eine ständige Kommunikation zwischen dem Rechner 23 und dem Datenspeicher 33 über das Bussystem 25 vermieden wird und damit die Datenbelastung bzw. die zu transformierende Datenmenge geringer gehalten und die Schnelligkeit der Regelvorrichtung zusätzlich erhöht werden kann.

Nach Übergabe der Daten vom Rechner 23 zum Ausgabenbaustein 34 sendet der Rechner 23 über das Bussystem 25 eine weitere Adresse für den Timer 26 aus, wodurch dieser aktiv wird und Daten vom Rechner 23 aufnehmen kann. Anschließend übersendet der Rechner 23 über das Bussystem 25 die Daten zur Einstellung einer Zeitdauer 45 für eine Halbwelle 46, wie in Fig. 3 ersichtlich.

Die Zeitdauer 45 der Halbwelle 46 wird aus einem Tastverhältnis von der Zeitdauer 45 zu einer Zeitdauer 47 einer Halbwelle 48 und aus einer Frequenz 49 ermittelt. Dies geschieht dadurch, daß über die Eingabevorrichtung 19 eine Frequenz 49 bestimmt wird und dabei ein Tastverhältnis für die positive Halbwelle 46 und für die negative Halbwelle 48 eingestellt wird. Der Rechner 23 kann durch Vorgabe der Frequenz 49 einer Periodendauer und dem Tastverhältnis der positiven Halbwelle 46 zur negativen Halbwelle 48 die Zeitdauer 45 und 47 errechnen.

Es ist jedoch auch möglich, für die positive Halbwelle 46 und für die negative Halbwelle 48 jeweils eine Frequenz 49 einzustellen, woraus sich der Rechner 23 wiederum die Zeitdauer 45 und 47 aus der Frequenz 49 der einzelnen Halbwellen 46 und 48 errechnen kann.

Ist die Zeitdauer 45 für die Halbwelle 46 dem Timer 26 übergeben, so wandelt der Timer 26 die über die Leitung 27 übergebenen Taktimpulse so um, daß in der voreingestellten Zeitdauer 45 vom Timer 26 mehrere Impulse, bevorzugt 256, erzeugt werden, die in der Zeitdauer 45 enthalten sind. Die vom Timer 26 generierten Impulse werden über die Leitung 29 an den Zähler 30 weitergeleitet. Der Zähler 30 zählt nun jeden vom Timer 26 übersendeten Impuls, bis er den vorbestimmbaren Zählerstand im vorliegenden Beispiel 256 erreicht hat. Nach Erreichen des maximalen Zählerstandes gibt der Zähler 30 über die Steuerleitung 31 ein Signal an den Rechner 23 ab. Weiters werden die vom Zähler 30 gezählten Impulse über die Leitungen 32, bevorzugt acht Leitungen bei einem Zählerstand von 256, dem Datenspeicher 33 linear zugeführt, d.h. daß die über den Ausgabebaustein 34 eingestellte Adresse für den Datenspeicher 33 bei jedem Zählimpuls des Zählers 30 um eins erhöht wird und somit immer ein anderer Speicherbereich im Datenspeicher 33 angesprochen wird.

In den Datenspeicher 33 sind nun die verschiedensten Kurvenformen infolge von Referenzsignalen 50 für eine Halbwelle digital abgespeichert, wobei jede Kurvenform einen eigenen Adreßbereich besitzt, der durch die Erhöhung der Adresse angesprochen wird. Um nun die Kurvenform, die aus einzelnen Referenzsignalen 50 besteht, aus dem Datenspeicher 33 herauszulesen, wird von dem Ausgabebaustein 34 über die Adreßleitungen 36 ein bestimmter Speicherbereich ausgewählt. Durch das Auswählen des Speicherbereiches der entsprechenden Kurvenform wird nun die Adresse über den Zähler 30 durch Ausgabe der Impulse des Timers 26 an die Leitungen 32 ständig erhöht und damit der Adreßbereich der einzelnen Kurvenformen für die Referenzsignale 50 abgefragt. Damit ergibt sich, daß durch die aus den verschiedensten Referenzsignalen 50 gebildete Sinuskurve bzw. Rechteckform oder Mischform die einzelnen Referenzsignale 50 durch die Erhöhung der Adresse von dem Zähler 30 angesprochen werden. Die von der Adresse angesprochenen Daten werden über die Leitung 37, die bevorzugt acht Leitungen enthält, an den Digital-Analogwandler 38 weitergegeben und von diesem die digitalen abgespeicherten Referenzsignale 50 in ein Analogsignal 51 umgewandelt. Dabei ist zu ersehen, daß die Abstände der einzelnen Referenzsignale 50 in den verschiedensten Zeitdauern 45 und 47 unterschiedlich groß sind.

Gleichzeitig steuert der Rechner 23 über die Leitung 41 die Schaltvorrichtung 42 an. Die Schaltvorrichtung 42 besteht dabei aus einem Schalter 52, der zwischen der positiven und negativen Halbwelle 46 oder 48 des Ausgangssignals, die der Kennlinie 21 entspricht, umschaltet, wobei beim Anlegen einer Spannung an die Leitung 41 der Schalter 52 auf die Leitung 41 umgeschaltet wird und dabei ein Multiplikationswert für die negative Halbwelle 48 an den Digital-Analogwandler 38 zugeführt wird. Liegt also an der Leitung 41 keine Spannung an, so bleibt der Schalter 52 in der gezeichneten Stellung und schaltet damit die Leitung 39 an den Digital-Analogwandler 38, d.h. daß ein weiterer Multiplikationswert für die positive Halbwelle 46 dem Digital-Analogwandler 38 zugeführt wird. Über die Leitungen 39, 40 werden entsprechende Werte 53 und 54, die zum Erreichen einer gewünschten Amplitude 55 für die positive Halbwelle 46 und eine Amplitude 56 für die negative Halbwelle 48 benötigt werden, ausgesendet. Dabei ist die Leitung 39 für die positive Halbwelle 46 und die Leitung 40 für eine negative Halbwelle 48 bestimmt. Durch das Ansteuern des Schalters 52 über die Leitung 41 kann nun die Amplitude 55 der positiven Halbwelle 46 und die Amplitude 56 der negativen Halbwellen 49 unterschiedlich groß sein. Die Schaltvorrichtung 42 gibt die von dem Rechner 23 ausgesendeten Multiplikationswerte für die positive und negative Halbwelle 46, 48 über die Steuerleitung 43 an den Digital-Analogwandler 38 ab.

Der Digital-Analogwandler 38 wandelt die von dem Datenspeicher 33 über die Leitung 37 übergebenen digitalen Referenzsignale 50 in ein Analogsignal 51 um. Dabei werden die vom Datenspeicher 33 übergebenen digitalen Referenzsignale 50 mit dem Multiplikationswert für die positive Halbwelle 46 multipliziert, wodurch sich die Amplitude 55 der Halbwelle 46 um einen Wert 54, wie schematisch in Fig. 3 gezeigt, erhöht, und diese ist von der Eingabevorrichtung 19 ständig veränderbar. Bei der negativen Halbwelle 48 wird die Referenzspannung 50 mit dem Multiplikationswert für die negative Halbwelle 48 multipliziert, d.h. die Leitung 41 an den Digital-Analogwandler 38 angelegt, wodurch sich die Amplitude 56 um einen Wert 53 erhöht.

Durch dieses spezielle Schaltungsdetail, in dem die Multiplikationswerte bzw. - faktoren, mit welchen die gespeicherten Grundwerte der Referenzsignale aus dem Datenspeicher 33 multipliziert werden, jeweils an einem Schalter anliegen, ist ein rascher Wechsel der Multiplikationswerte bzw. -faktoren für die positive und negative Halbwelle ohne Belastung des Bussystems und ohne daß der Rechner ständig neue Daten liefern muß, möglich.

Zur Erklärung ist darauf hinzuweisen, daß in Fig. 3 der Kurvenverlauf für die in der Steuerleitung 14 zur Weiterleitung an die Inverterstromquelle 4 anliegenden Signale in strichpunktierter Linie dargestellt sind. Die Generierung dieser Referenzsignale und der daraus hervorgehenden Kurvenform erfolgt für jede der Halbwellen im positiven oder nur im negativen Potentialbereich. Die am Ausgang nämlich der Leitung 10 und 11 der Inverterstromquelle 4 anliegende Kurvenform des Stromverlaufes wird dann durch den Wert in Abhängigkeit von dem über die Steuerleitung 15 gelieferten Signal, nämlich ob eine positive oder negative Halbwelle hergestellt werden soll, vorgenommen. Aus diesem Grund ist auch die strichpunktierte Linie, die die aufgrund der Referenzsignale in der Steuerleitung 14 erzeugte Kurvenform der Halbwelle 48 zeigt, für die Halbwelle 46 nicht ersichtlich, da sie sich mit der Kurvenform des Stromverlaufes in den Leitungen 10, 11 der Inverterstromquelle 4 überdeckt. Würde beispielsweise in den Leitungen 10, 11 lediglich ein im positiven Potentialbereich pulsierendes Stromsignal anliegen, so wäre auch die der Halbwelle 48 zugeordnete Kurve der Referenzsignale nicht zu ersehen.

Gleichzeitig mit der Leitung 41 steuert der Rechner 23 die Steuerleitung 15 an, d.h. wird keine Spannung an die Steuerleitung 15 angelegt, so ist die analoge Ausgangsspannung am Digital-Analogwandler 38 für die positive Halbwelle 46 und beim Anliegen einer Spannung an die Steuerleitung 15 die analoge Ausgangsspannung am Digital-Analogwandler 38 für die negative Halbwelle 48 bestimmt, d.h. der Rechner 23 legt keine Spannung an die Steuerleitung 15 an, wodurch die Inverterstromquelle 4, die analoge Ausgangsspannung an der Steuerleitung 14 zur Erzeugung für die positive Halbwelle 46 beaufschlagt. Die Erzeugung einer Ausgangsspannung für den Verbraucher 7 wird, wie in Fig. 1 beschrieben, durchgeführt.

Hat der Zähler 30 seinen maximalen Zählerstand erreicht, so sendet er über die Steuerleitung 31 ein Spannungssignal zum Rechner 23. Durch das Anliegen des Spannungssignals an der Steuerleitung 31 wird dem Rechner 23 mitgeteilt, daß die Erzeugung der Halbwelle 46 abgeschlossen ist, wodurch die verschiedenen Schaltvorgänge für die Herstellung der negativen Halbwelle 48 wiederholt werden können.

Für die negative Halbwelle 48 können nun von der Eingabevorrichtung 19 die Parameter für die Amplitudenhöhe, die Frequenz bzw. das Taktverhältnis und die Kurvenform der Halbwellen 46 und 48 neu eingestellt werden. Es ist jedoch möglich, die Parameter für die positive Halbwelle 46 und für die negative Halbwelle 48 nach der Inbetriebnahme der Steuervorrichtung 16 voreinzustellen, wobei der Rechner 23 die eingegebenen Parameter in den Speicher 44 hinterlegt und diese nach Fertigstellung einer Kurvenform, wie z.B. der Halbwelle 46, die Parameter für die nächste Kurvenform, z.B. die Halbwelle 48 aus dem Speicher 44 herausliest. Weiters ist es jedoch möglich, die Parameter für die Amplitude 55 und 56 der Zeitdauer 45 und 47 und der Kurvenform der Halbwellen 46 und 48 während des Betriebes der Steuervorrichtung 16 zu ändern, wobei nach Fertigstellung einer Halbwelle 46 oder 48 die geänderten Parameter für die nächste Halbwelle 46 oder 48 herangezogen werden.

Weiters ist es mit der erfindungsgemäßen Steuervorrichtung 16 möglich, einen pulsierenden Gleichstrom für den Verbraucher 7 zu generieren. Dabei müssen nur die Parameter für die positive Halbwelle 46 eingestellt werden, wodurch der Rechner 23 keine Spannung an die Steuerleitung 15 anlegt, sodaß die Inverterstromquelle 4 nur mehr positive Halbwellen 46 erzeugt. Es ist jedoch möglich, für die positive Halbwelle 46 und/oder für die negative Halbwelle 48 jede beliebige Kurvenform zu generieren.

In Fig. 4 ist ein weiteres Beispiel zur Erzeugung der unterschiedlichen Kurvenformen für die positive und negative Halbwelle 46 und 49 anhand eines Diagrammes gezeigt, wobei auf der Ordinate der Strom A und auf der Abszisse die Zeit t aufgetragen ist.

Die positive Halbwelle 46 besteht dabei aus einem Rechteck mit einer Zeitdauer 45 und die negative Halbwelle 48 aus einem Sinus mit einer Zeitdauer 47, wobei daraus zu ersehen ist, daß die Zeitdauer 45 und 47 innerhalb einer Periode der Frequenz 49 gegenüber der in Fig. 3 gezeigten Kennlinie 21 unterschiedlich ist. Diese unterschiedliche Zeitdauer 45 und 47 bewirkt, daß bei gleicher Anzahl der Referenzsignale für jede Halbwelle 46 und 48 die Zeitdauer innerhalb welcher ein Referenzsignal 50 auf das andere folgt, im Bereich der Halbwelle 46 größer ist als in der Halbwelle 48. Um diesen Unterschied optisch deutlicher zum Ausdruck zu bringen, sind rein schematisch die Referenzsignale in die Kurvenform eingetragen, wobei jeweils die den Stromverlauf am Ausgang der Inverterstromquelle 4 darstellende Kurvenform gewählt worden ist, wiewohl die Referenzsignale an sich nur in einer positiven Halbwelle auftreten, wie dies bereits anhand der Fig. 3 näher im Detail beschrieben worden ist.

Des weiteren ist aus dieser Darstellung in Fig. 4 im Vergleich zur Darstellung im Diagramm in Fig. 3 zu ersehen, daß auch die Amplituden 55 und 56 der einzelnen Halbwellen zueinander auf unterschiedliche Größen einstellbar sind.

Im Rahmen der Erfindung ist es selbstverständlich auch möglich, Schaltungsdetails bzw. die dargestellten Einzelschaltungsteile im Rahmen des fachmännischen Könnens durch andere aus dem Stand der Technik bekannte Schaltungsteile zu ersetzen, und es können auch einzelne Baugruppen der Schaltung für sich eigenständige erfindungsgemäße Lösungen bilden.

Des weiteren wird darauf hingewiesen, daß es sich bei den dargestellten Schaltbildern um schematische vereinfachte Blockschaltbilder handelt, in welchen einzelne Schaltungsdetails, wie z.B. zur Stabilisierung der Spannung bzw. zur Vermeidung von Kurzschlüssen, nicht dargestellt sind.

Vor allem können die einzelnen, in den Fig.1; 2,3; 4 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Spannungsversorgungsnetz
- 2: Phasenleiter
- 3: Nulleiter
- 4: Inverterstromquelle
- 5: Zuleitung
- 6: Zuleitung
- 7: Verbraucher
- 8: Schweißgerät
- 9: Schweißpistole
- 10: Leitung
- 11: Leitung
- 12: Steuereingang
- 13: Steuereingang
- 14: Steuerleitung
- 15: Steuerleitung
- 16: Steuervorrichtung
- 17: Leitung
- 18: Leitung
- 19: Eingabevorrichtung
- 20: Ausgabevorrichtung
- 21: Kennlinie
- 22: Rechnereinheit
- 23: Rechner
- 24: Mikroprozessor
- 25: Bussystem
- 26: Timer
- 27: Leitung
- 28: Taktgenerator
- 29: Leitung
- 30: Zähler
- 31: Steuerleitung
- 32: Leitung
- 33: Datenspeicher
- 34: Ausgabebaustein
- 35: Ausgang
- 36: Adreßleitung
- 37: Leitung
- 38: Digital-Analogwandler
- 39: Leitung
- 40: Leitung
- 41: Leitung
- 42: Schaltvorrichtung
- 43: Steuerleitung
- 44: Speicher
- 45: Zeitdauer
- 46: Halbwelle
- 47: Zeitdauer
- 48: Halbwelle
- 49: Frequenz
- 50: Referenzsignal
- 51: Analogsignal
- 52: Schalter
- 53: Wert
- 54: Wert
- 55: Amplitude
- 56: Amplitude

## Patentansprüche

1. Verfahren zur Herstellung eines vorbestimmbaren Stromverlaufes für einen Schweißstrom zur Speisung eines Schweißgerätes (8), insbesondere eines AC-WIG-Elektroden und MIG/MAG-Schweißgerätes, bei dem eine aus einer Wechselspannung erzeugte Gleichspannung durch Zerhacken dieser Gleichspannung in eine pulsierende Gleichspannung umgewandelt wird, und daß für eine fix vorgegebene Kurvenform unmittelbar aufeinander folgende Referenzsignale (50) festgelegt werden, die eine Anzahl von Halbwellen (14, 18) bildet, worauf für die einzelnen Referenzsignale (50) der Halbwellen (46, 48) ein einer bestimmten Amplitudenhöhe entsprechender Sollwert festgelegt wird, dadurch gekennzeichnet, daß für eine positive und eine negative Halbwelle (46,48) eine Kurvenform unabhängig voneinander festgelegt wird und daß danach zur Herstellung der gewünschten Kurvenform des Stromverlaufes die Referenzsignale (50) für die beiden unmittelbar aufeinanderfolgenden Halbwellen (46,48) unabhängig voneinander mit einem der maximal gewünschten Amplitude (55,56) der Kurvenform entsprechenden Sollwert verändert werden und die Zeitdauer (45,47) festgelegt wird, innerhalb der mit der vorher festgelegten Anzahl von Referenzsignalen (50) eine Halbwelle (46,48) gebildet wird.

2. Verfahren nach Anspruch 1, dadurch gekennzeichnet, daß die Zeitdauer (45 und 47) durch ein Tastverhältnis einer Frequenz (49) oder durch Eingabe von einer Frequenz (49) für die positive Halbwelle (46) und die negative Halbwelle (48) von dem Rechner (23) errechnet und eingestellt wird.

3. Verfahren nach Anspruch 1 und 2, dadurch gekennzeichnet, daß die Referenzsignale (50) für jeweils eine Halbwelle (46, 48) in einem Datenspeicher (33) als digitale Werte hinterlegt werden und in einem Digital-Analogwandler (38) mit einem die maximale Amplitudenhöhe der Halbwelle (46, 48) festlegenden Sollwert zu einem analogen Spannungsreferenzwert umgewandelt wird, worauf die Stromabgabe der Inverterstromquelle (4) in Abhängigkeit von diesen Spannungsreferenzwert festgelegt wird.

4. Verfahren nach einem oder mehreren der Ansprüche 1 bis 3, dadurch gekennzeichnet, daß im Datenspeicher die Referenzsignale (50) für mehrere unterschiedliche Kurvenformen jeweils einer der beiden unmittelbar aufeinanderfolgenden Halbwellen (46, 48) gespeichert wird.

5. Verfahren nach einem oder mehreren der Ansprüche 1 bis 4, dadurch gekennzeichnet, daß der Abstand zwischen den einzelnen Referenzsignalen (50) in Abhängigkeit von der eingestellten Zeitdauer (45, 47), insbesondere der Frequenz (49) gesteuert wird und in Abhängigkeit von der für eine Kurvenform einer Halbwelle (46, 48) festgelegten Referenzsignale (50) und der festgelegten Zeitdauer (45, 47) die einzelnen Referenzsignale (50) an den Digital-Analogwandler (38) übermittelt werden.

6. Verfahren nach einem oder mehreren der Ansprüche 1 bis 5, dadurch gekennzeichnet, daß die Zeitdauer (45, 47) und damit die Zeitspanne zwischen den einzelnen Referenzsignalen (50) und/oder der Sollwert für die maximal gewünschte Amplitudenhöhe der Kurvenform während der Abgabe der pulsierenden Gleichspannung an den Verbraucher (7) verändert wird.

7. Verfahren nach einem oder mehreren der Ansprüche 1 bis 6, dadurch gekennzeichnet, daß während der Lieferung der pulsierenden Gleichspannung an den Verbraucher (7) die einer Kurvenform einer Halbwelle (46, 48) entsprechenden Referenzsignale (50) gegen jene einer anderen Kurvenform der Halbwelle (46, 48) ausgetauscht werden.

8. Verfahren nach einem oder mehreren der Ansprüche 1 bis 7, dadurch gekennzeichnet, daß der Wechsel von den Referenzsignalen (50) einer Kurvenform der Halbwelle (46, 48) auf die Referenzsignale (50) einer anderen Kurvenform der Halbwelle (46, 48) bei Null-Durchgang erfolgt.

9. Verfahren nach einem oder mehreren der Ansprüche 1 bis 8, dadurch gekennzeichnet, daß die Anzahl der eine Halbwelle (46, 48) bildenden Referenzsignale (50) von zwei einander unmittelbar aufeinander folgenden Halbwellen (46, 48) gleich groß ist.

10. Schweißgerät, insbesondere AC-WIG-Elektroden und MIG/MAG-Schweißgeräte mit einer Inverterstromquelle (4) und einer Steuervorrichtung (16) zur Ansteuerung der Inverterstromquelle (4) zur Erzeugung von Halbwellen (46, 48) eines pulsierenden Gleichstromes, der durch Zerhacken einer aus einer Wechselspannung erzeugten Gleichspannung hergestellt wird und daß der Inverterstromquelle (4) ein Datenspeicher zur Abspeicherung der Referenzsignale (50) für unterschiedliche Kurvenformen vorgeschaltet ist, dadurch gekennzeichnet, daß der Rechner (23) über einen Ausgabebaustein (34) am Datenspeicher (33) anliegt, der zur Aufnahme eines einer bestimmten Kurvenform entsprechenden Adreßsignals ausgebildet ist und daß dem Rechner (23) ein Timer (26) mit einem Zähler (30) vorgeordnet ist.

11. Schweißgerät nach Anspruch 10, dadurch gekennzeichnet, daß der Zähler (30) bei Feststellung der voreingestellten Anzahl von Zählimpulsen, ein Steuersignal an den Rechner (23) übermittelt, worauf in Abhängigkeit vom am Rechner (23) eingestellten Programm die Adresse im Ausgabebaustein (34) neu belegt wird.

12. Schweißgerät nach Anspruch 10 oder 11, dadurch gekennzeichnet, daß zwischen dem Rechner (23) und dem Digitalanalogwandler (38) eine Schaltvorrichtung (42) mit einem Schalter (52) angeordnet ist und daß an den beiden Eingängen anliegenden Leitungen (39 und 40) des Schalters (52) jeweils eine zur Erzielung der maximalen Amplituden der unmittelbar aufeinanderfolgenden Halbwellen entsprechende Steuergröße anliegt und daß bei Anliegen des Steuersignals vom Zähler (30) am Rechner (23) der Schalter (52) zur Umschaltung angesteuert ist und der Ausgang des Schalters (52) über die Leitung (43) am Digital-Analogwandler (38) angeschlossen ist.

13. Schweißgerät nach einem oder mehreren der Ansprüche 10 bis 12, dadurch gekennzeichnet, daß der Rechner (23) bei Nulldurchgang ein Steuersignal über die Leitung (15) an die Inverterstromquelle (4) übermittelt.

## Claims

1. Method to predetermine the welding current to supply a welding apparatus (8), in particular an AC-TIG electrode and MIG/MAG welding apparatus, in which a direct voltage produced from an alternating voltage is converted by chopping said direct voltage into a pulsating direct voltage, and for a fixed given curve immediately consecutive reference signals (50) are determined, which form a number of half-waves (14, 18), whereupon for the individual reference signals (50) of the half-waves (46, 48) an index value corresponding to a specific amplitude is determined, characterised in that for both a positive and a negative half-wave (46, 48) a curve is determined independently, and in that accordingly to produce the desired curve of the current the reference signals (50) for both immediately consecutive half-waves (46, 48) are changed independently by an index value corresponding to the maximum desired amplitude (55, 56) of the curve, and the period (45, 47) is determined within which a half-wave (46, 48) is formed with the predetermined number of reference signals (50).

2. Method according to Claim 1, characterised in that the period (45 and 47) is calculated and set by the computer (23) by a pulse-duty factor of a frequency (49) or by inputting a frequency (49) for the positive half-wave (46) and the negative half-wave (48).

3. Method according to Claims 1 and 2, characterised in that the reference signals (50) for each half-wave (46, 48) are saved in a memory (33) as digital values and are converted in a digital-to-analogue converter (38) by an index value determining the maximum amplitude of the half-wave (46, 48) to an analogue voltage reference value, whereupon the current output of the inverter current source (4) is determined depending on said voltage reference value.

4. Method according to one or more of Claims 1 to 3, characterised in that in the memory the reference signals (50) for several different curves of one of the two immediately consecutive half-waves (46, 48) respectively are stored.

5. Method according to one or more of Claims 1 to 4, characterised in that the distance between the individual reference signals (50) is controlled depending on the set period (45, 47), in particular the frequency (49), and depending on the reference signals (50) determined for a curve of a half-wave (46, 48) and the set period (45, 47) the individual references signals (50) are transmitted to the digital-to-analogue converter (38).

6. Method according to one or more of Claims 1 to 5, characterised in that the period (45, 47) and with that the time interval between the individual reference signals (50) and/or the index value for the maximum desired amplitude of the curve is changed during the output of the pulsating direct voltage to the user (7).

7. Method according to one or more of Claims 1 to 6, characterised in that during the delivery of the pulsating direct voltage to the user (7) the reference signals (50) corresponding to a curve of a half-wave (46, 48) are swapped for those of a different curve of the half-wave (46, 48).

8. Method according to one or more of Claims 1 to 7, characterised in that the change from the reference signals (50) of one curve of the half-wave (46, 48) to the reference signals (50) of a different curve of the half-wave (46, 48) is performed at zero passage.

9. Method according to one or more of Claims 1 to 8, characterised in that the number of reference signals (50) forming a half-wave (46, 48) of two immediately consecutive half-waves (46, 48) is equal.

10. Welding apparatus, in particular an AC-TIG electrode and MIG/MAG welding apparatus with an inverter current source (4) and a control device (16) for controlling the inverter current source (4) to produce half-waves (46, 48) of a pulsating direct current, which is produced by chopping a direct current produced from an alternating current, and a memory for storing the reference signals (50) for different curves is connected before the inverter current source (4), characterised in that the computer (23) is connected to the memory (33) via an output module (34), which memory is designed to pick up an address signal corresponding to a specific curve, and in that a timer (26) with a counter (30) is connected before the computer (23).

11. Welding apparatus according to Claim 10, characterised in that the counter (30) on determining the preset number of count pulses transmits a control signal to the computer (23), whereupon depending on the program set on the computer (23) the address in the output module (34) is reassigned.

12. Welding apparatus according to Claim 10 or 11, characterised in that between the computer (23) and the digital-to-analogue converter (38) a switching device (42) with a switch (52) is arranged and in that at the lines (39 and 40) of the switch (52) for the two inputs there is a corresponding control variable to obtain the maximum amplitudes of the immediately consecutive half-waves, and in that on connecting the control signal from the counter (30) to the computer (23) the switch (52) is driven to change-over and the output of the switch (52) is connected via the line (43) to the digital-to-analogue converter (38).

13. Welding apparatus according to one or more of Claims 10 to 12, characterised in that the computer (23) on zero passage transmits a control signal via line (15) to the inverter current source (4).

## Revendications

1. Procédé d'établissement d'un parcours apte à être prédéterminé d'un courant de soudage pour alimenter un appareil de soudage (8), notamment un appareil de soudage à électrodes pour soudage à l'arc TIG à courant alternatif et pour soudage à l'arc MIG/MAG, où une tension continue produite à partir d'une tension alternative est transformée par hâchage de cette tension continue en une tension continue pulsée et que pour une forme de courbe prédéterminée d'une manière fixe sont fixés des signaux de référence (50) qui se suivent directement, qui forme un certain nombre de demi-ondes (14, 18), à la suite de quoi est fixé pour les différents signaux de référence (50) des demi-ondes (46, 48) une valeur de consigne correspondant à une hauteur d'amplitude déterminée, caractérisé en ce qu'on détermine indépendamment l'une de l'autre une forme de courbe pour une demi-onde positive et une demi-onde négative (46, 48) et en ce qu'ensuite, pour établir la forme de courbe souhaitée du parcours du courant, les signaux de référence (50) pour les deux demi-ondes (46, 48) qui se suivent directement sont modifiés indépendamment les uns des autres par une valeur de consigne correspondant à l'amplitude maximale souhaitée (55, 56) de la forme de courbe et que la durée (45, 47) est fixée pendant laquelle, à partir du nombre fixé préalablement de signaux de référence (50), une demi-onde (46, 48) est formée.

2. Procédé selon la revendication 1, caractérisé en ce que la durée (45 et 47) est calculée et réglée par une durée de cycle d'une fréquence (49) ou par l'introduction d'une fréquence (49) pour la demi-onde positive (46) et la demi-onde négative (48) par le calculateur (23).

3. Procédé selon la revendication 1 et 2, caractérisé en ce que les signaux de référence (50) pour respectivement une demi-onde (46, 48) sont stockés dans une mémoire (33) comme valeurs numériques et sont converties dans un convertisseur numérique-analogique (38) par une valeur de consigne déterminant la hauteur d'amplitude maximale de la demi-onde (46, 48) en une valeur de référence de tension analogique, à la suite de quoi est fixé l'émission de courant de la source de courant d'inversion (4) en fonction de cette valeur de référence de tension.

4. Procédé selon l'une ou plusieurs des revendications 1 à 3, caractérisé en ce que sont stockés dans la mémoire les signaux de référence (50) pour plusieurs formes de courbe différentes respectivement d'une des deux demi-ondes (46, 48) qui se suivent directement.

5. Procédé selon l'une ou plusieurs des revendications 1 à 4, caractérisé en ce que l'écart entre les différents signaux de référence (50) est commandé en fonction de la durée réglée (45, 47), notamment de la fréquence (49) et en ce que, en fonction des signaux de référence (50) déterminés pour une forme de courbe d'une demi-onde (46, 48) et de la durée fixée (45, 47), les différents signaux de référence (50) sont transmis au convertisseur numérique-analogique (38).

6. Procédé selon l'une ou plusieurs des revendications 1 à 5, caractérisé en ce que la durée (45, 47), et par conséquent l'espace de temps entre les différents signaux de référence (50) et/ou la valeur de consigne de la hauteur d'amplitude maximale souhaitée de la forme de courbe est modifiée pendant l'émission de la tension continue pulsée à l'utilisateur (7).

7. Procédé selon l'une ou plusieurs des revendications 1 à 6, caractérisé en ce que pendant l'émission de la tension continue pulsée à l'utilisateur (7), les signaux de référence (50) correspondant à une forme de courbe d'une demi-onde (46, 48) sont échangés contre ceux d'une autre forme de courbe de la demi-onde (46, 48).

8. Procédé selon l'une ou plusieurs des revendications 1 à 7, caractérisé en ce que le changement des signaux de référence (50) d'une forme de courbe de la demi-onde (46, 48) aux signaux de référence (50) d'une autre forme de courbe de la demi-onde (46, 48) a lieu par un passage par zéro.

9. Procédé selon l'une ou plusieurs des revendications 1 à 8, caractérisé en ce que le nombre des signaux de référence (50) formant une demi-onde (46, 48) de deux demi-ondes (46, 48) qui se suivent directement est de la même grandeur.

10. Appareil de soudage, notamment appareil de soudage à électrodes pour soudage à l'arc TIG à courant alternatif et pour soudage à l'arc MIG/MAG avec une source de courant d'inversion (4) et un dispositif de commande (16) pour commander la source de courant d'inversion (4) pour produire des demi-ondes (46, 48) d'un courant continu pulsé qui est réalisé par hâchage d'une tension continue produite à partir d'une tension alternative et en ce qu'il est monté en amont de la source de courant d'inversion (4) une mémoire pour stocker les signaux de référence (50) pour des formes de courbe différentes, caractérisé en ce que le calculateur (23) s'applique par un élément de sortie (34) à la mémoire (33) qui est réalisée pour recevoir un signal d'adresse correspondant à une forme de courbe déterminée et en ce qu'il est monté en amont du calculateur (23) une horloge (26) avec un compteur (30).

11. Appareil de soudage selon la revendication 10, caractérisé en ce que le compteur (30), lorsqu'il constate le nombre prédéterminé d'impulsions de comptage, transmet un signal de commande au calculateur (23) à la suite de quoi, en fonction du programme réglé au calculateur (23), l'adresse dans l'élément de sortie (34) est occupé de nouveau.

12. Appareil de soudage selon la revendication 10 ou 11, caractérisé en ce qu'il est disposé entre le calculateur (23) et le convertisseur numérique-analogique (38) un dispositif de commutation (42) avec un commutateur (52) et en ce qu'il est appliqué aux lignes (39 et 40) du commutateur (52) s'appliquant aux deux entrées respectivement une grandeur de commande qui convient pour l'obtention des amplitudes maximales des demi-ondes qui se suivent directement et que lors de l'application du signal de commande du compteur (30) au calculateur (23), le commutateur (52) est commandé en commutation, et que la sortie du commutateur (52) est raccordée par la ligne (43) au convertisseur numérique-analogique (38).

13. Appareil de soudage selon l'une ou plusieurs des revendications 10 à 12, caractérisé en ce que le calculateur (23), lors d'un passage par zéro, transmet un signal de commande par la ligne (15) à la source de courant d'inversion (4).
